# EUROPEAN PATENT SPECIFICATION

(11) **EP 0 406 008 B1**
(45) Date of publication and mention of the grant of the patent: **21.09.1994**
(21) Application number: 90307148.8
(22) Date of filing: 29.06.1990
(51) Int. Cl.: C04B 35/54

(54) **Graphite sheet material**
Graphitfolie
Feuille de graphite

(30) Priority: 30.06.1989 US 373924
(43) Date of publication of application: 02.01.1991
(73) Proprietor: UCAR CARBON TECHNOLOGY CORPORATION, Danbury, Connecticut 06817-0001 (US)
(72) Inventor: Mercuri, Robert Angelo, Seven Hills, Ohio 44131 (US); Getz, George, Parma Heights, Ohio 44130 (US); Greinke, Ronald Alfred, Medina, Ohio 44256 (US); Howard, Ronald Albert, Brook Park, Ohio 44142 (US)
(74) Representative: Gore, Peter Manson

(56) References cited:
- EP-A- 0 305 984
- DE-C- 1 253 130

## Description

This invention relates to a process for forming ultra-thin flexible sheet material from natural graphite.

Graphites are made up of layer planes of hexagonal arrays of networks of carbon atoms. These layer planes of hexagonally arranged carbon atoms are substantially flat and are oriented or ordered so as to be substantially parallel and equidistant to one another. The substantially flat, parallel equidistant sheets or layers of carbon atoms, usually referred to as basal planes, are linked or bonded together and groups thereof are arranged in crystallites. Highly ordered graphites consist of crystallites of considerable size; the crystallites being highly aligned or oriented with respect to each other and possess well ordered carbon layers. In other words, highly ordered graphites have a high degree of preferred crystallite orientation. It should be noted that such graphites possess anisotropic structures and thus exhibit or possess many properties which are highly directional. Briefly, natural graphites may be characterized as laminated structures of carbon, that is, structures consisting of superposed layers or laminae of carbon atoms joined together by weak Van de Waals forces.

The conventional process for producing flexible graphite sheet material, e.g. web, paper, strip, tape, foil, mat or the like is described in US-A- 3 404 061 and briefly comprises treating the graphite particles with a suitable oxidizing medium to form soggy graphite particles which are heated to permit a natural expansion and then compressed or compacted together, in the absence of any binder, so as to form a flexible integrated graphite sheet of desired thickness and density. The compression or compaction is carried out by passing a thick bed of expanded particles between pressure rolls or a system of multiple pressure rolls to compress the material in several stages into sheet material of desired thickness. The compression operation flattens the expanded graphite particles causing them to engage and interlock. However, if the compressive force applied to the particles is excessive the particles split and separate causing weak spots which puncture to form pinholes when forming very thin sheets. Accordingly, the sheet thickness was heretofore substantially limited to a thickness in excess of about 0.254 mm (ten mils). One recent proposal for forming thin sheet graphite material with a thickness equal to 0.254 mm (ten mils) without forming pinholes is described in Japanese patent publication application No. 61(1986)-133865 entitled Method for Producing Flex Graphite sheet. According to the Japanese publication a thin graphite sheet can be formed without pinholes by applying an adhesive layer and expanded graphite on a polyester film, metal foil or paper tape before the graphite sheet is rolled down to the desired thickness of ten mils.

EP-A- 305984 describes the preparation of graphite sheets from exfoliated natural graphite. The graphite is intercalated using sulphuric acid and nitric acid and thereafter exfoliated to 352cm³/g by rapid heating to over 1000°C without intermediate washing and drying. Thereafter the expanded graphite can be rolled into a sheet of unspecified thickness. However pinholes will be found if the sheet is rolled to below 0.254 m.m. (ten mils).

It has been discovered in accordance with the present invention that a sheet of ultra-thin graphite of below 0.254 mm (ten mils) in thickness can be formed without pinholes from natural graphite particles by increasing the degree of expansion of the particles during the exfoliation operation to produce particles which, prior to compression, have been expanded to a specific volume of at least 450 cc/gm. By causing the exfoliated graphite particles to expand before compression to at least this minimum specific volume substantially reduces the susceptibility of forming pinholes during compression of the particles into ultra-thin sheet material of below 0.203mm (8 mils) in thickness and particularly 0.025 to 0.102 mm (1 to 4 mils) in thickness with a high degree of area/weight uniformity. The process of the present invention is applicable to natural graphite particles.

According to the present invention there is provided a process for producing a pinhole-free graphite sheet of less than 0.203mm (8 mils) in thickness which comprises:
(a) providing natural graphite particles in a particle size distribution of 850 µm to 300 µm (20 to 50 mesh USS (U.S. Standard)), having a purity of at least 97% pure natural graphite;
(b) treating the natural graphite particles with an oxidizing agent to intercalate the graphite,
(c) washing the intercalated graphite particles to minimize agglomeration;
(d) drying the washed particles;
(e) introducing the dried particles directly into a preheated furnace at a preselected temperature of at least about 1093°C (2000°F) to cause the graphite particles to undergo extremely rapid expansion until the particles expand to a specific volume of at least 500 cc/gm; and
(f) compressing the voluminously expanded graphite in the absence of a binder to a sheet-like material below 0.203mm (8 mils) in thickness.

Only particles of natural graphite may be selected for carrying out the process of the present invention, with a graphite purity of at least about 97% and preferably a graphite purity of above 99%. The natural graphite particles may be in the form of flakes of laminated graphite mined from natural graphite.

The graphite particles are treated with a suitable oxidizing agent, medium or mixtures thereof. An example of a preferred oxidizing medium comprises sulphuric acid and nitric acid. As is known to the art, various combinations of oxidizing agents and oxidizing mixtures may be employed to effect intercalation of the layered graphite particles. Other acids and oxidizing agents include chromic acid, potassium chlorate, potassium chromate, potassium dichromate, potassium permanganate, perchloric acid, hydrogen peroxide and phosphoric acid. A wide range of oxidizing agent concentrations is usable. The treatment of graphite particles with oxidizing agents or oxidizing mixtures is carried out for an appropriate time period to fully intercalate the particles.

Upon completion of the oxidizing treatment, the thoroughly wetted or soggy graphite particles are rinsed or washed with an aqueous solution, preferably water, to minimize particle agglomeration and to leach the residual acid. The rinsed or washed particles are then dried by passing the particles through a drier to reduce the moisture content to less than about 2% by weight and preferably to less than about 1% by weight water.

The exfoliation of the particles is controlled by introducing the dried particles directly into a furnace which has been preheated to at least about 1093°C (2000°F) and preferably to a temperature of about 1371°C (2500°F) or higher. The direct injection of the particles into the very hot furnace is critical to the invention. Although any conventional furnace may be used, a furnace employing a flame burner is preferred with the particles directly injected into the hottest spot of the furnace.

Induction of the predried particles into the preheated furnace as described above results in exfoliated graphite particles expanding to a specific volume of at least 500 cc/gm and preferably 600 cc/gm to 1,000 cc/gm.

The voluminously exfoliated particles are then passed through pressure rolls or a series of multiple pressure rolls adjusted to form a compacted or compressed sheet with a thickness of below 0.203mm (8 mils) and preferably 0.025 to 0.102 mm (1 to 4 mils) in thickness. The true diameter of calendering rolls should be accurately specified preferably to at least ± 0.127 mm (± 0.0005 inches).

The present invention will now be illustrated with reference to, but in no manner limited to, the following Example.

### EXAMPLE

227 kg (500 pounds of 600 µm (minus 30 USS mesh), 99.5% pure natural graphite flake were treated in a mixture of sulphuric and nitric acids at concentrations to yield the desired intercalation compound. The flake was water washed to minimize agglomeration and dried to approximately 1% by weight water. The flake was inducted into a furnace at 1371°C (2500°F) to effect extremely rapid and, therefore high expansions. The exfoliated graphite expanded to 600 cc/gm and was capable of being rolled into continuous pinhole-free sheet material, 61cm (24 inches) in width, 68g/m² (2 ounces/square yard), about 0.006 to 0.008 mm (0.002 to 0.003 inches) in thickness, and with an area weight uniformity of 15% or better.

The best results were achieved with a minimum of 450 cc/gm expansion particularly for gauges thinner than 0.008 mm (0.003 inches). In all cases ultra thin product produced in accordance with the process of the present invention was found to be substantially pinhole-free over its entire length using exfoliated particles expanded to a specific volume of 450 cc/gm and absolutely pinhole-free at a specific volume of between 500-600 cc/gm independent of the length of product. The optimal expansion for the exfoliated graphite particles is 1000 cc/gm.

## Claims

1. A process for producing pinhole free graphite sheet having a thickness of less than 0.203 mm (8 mils) which comprises:
(a) providing natural graphite particles in a particle size distribution of 850 µm to 300 µm mesh USS (U.S. Standard)), having a purity of at least 97% pure natural graphite;
(b) treating the natural graphite particles with an oxidizing agent to intercalate the graphite;
(c) washing the intercalated graphite particles to minimize agglomeration;
(d) drying the washed particles;
(e) introducing the dried particles directly into a preheated furnace at a preselected temperature of at least about 1093°C (2000°F) to cause the graphite particles to undergo extremely rapid expansion until the particles expand to a specific volume of at least 500 cc/gm; and
(f) compressing the voluminously expanded graphite in the absence of a binder to a sheet like material below 0.203mm (8 mils) in thickness.

2. A process according to claim 1, wherein the particles are dried to less than about 2% by weight water.

3. A process according to claim 2, wherein the particles are dried to less than about 1% by weight water.

4. A process according to any of claims 1 to 3, wherein the dried particles are inducted into a preheated furnace at a preselected temperature of at least about 1371°C (2500°F).

5. A process according to any one of claims 1 to 4, wherein the graphite particles are expanded to 600 to 1000 cc/gm.

6. A process according to any of claims 1 to 5, wherein the expanded graphite particles are compressed into sheet material of 0.025 to 0.102mm (1 to 4 mils) in thickness.

7. A process according to any of claims 1 to 6, wherein the oxidizing agent comprises sulphuric acid and nitric acid.

8. A process according to any of claims 1 to 7, wherein, in (c), the graphite particles are washed with an aqueous solution.

9. A process according to any of claims 1 to 8, wherein, in (c), the graphite particles are washed with water.

## Patentansprüche

1. Verfahren zur Herstellung einer nadellochfreien Graphitfolie mit einer Dicke von weniger als 0,203 mm (8 mils), bestehend aus:
(a) Verwendung von natürlichen Graphitteilchen mit einer Teilchengrößenverteilung von 850 µm bis 300 µm (20 bis 50 mesh USS (U.S. Standard)), mit einer Reinheit von wenigstens 97 % bezogen auf reinen, natürlichen Graphit;
(b) Behandeln der natürlichen Graphitteilchen mit einem Oxidationsmittel zur Einlagerung in den Graphit;
(c) Waschen der interkalierten Graphitteilchen zur Minimierung der Agglomeratbildung;
(d) Trocknen der gewaschenen Teilchen;
(e) direktem Einbringen der getrockneten Teilchen in einen auf eine vorgewählte Temperatur von wenigstens ungefähr 1093°C (2000°F) vorgeheizten Ofen, damit die Graphitteilchen einer extrem schnellen Ausdehnung unterworfen werden, bis sich die Teilchen auf ein spezifisches Volumen von wenigstens 500 cm³/g ausdehnen; und
(f) Zusammenpressen des zu großem Volumen ausgedehnten Graphits ohne Bindemittel zu einem folienähnlichen Material mit einer Dicke von weniger als 0,203 mm (8 mils).

2. Verfahren nach Anspruch 1, dadurch gekennzeichnet, daß die Teilchen bis zu einem Wassergehalt von weniger als ungefähr 2 Gew.% getrocknet werden.

3. Verfahren nach Anspruch 2, dadurch gekennzeichnet, daß die Teilchen bis zu einem Wassergehalt von weniger als ungefähr 1 Gew.% getrocknet werden.

4. Verfahren nach einem der Ansprüche 1 bis 3, dadurch gekennzeichnet, daß die getrockneten Teilchen in einen auf eine vorgewählte Temperatur von wenigstens ungefähr 1371°C (2500°F) vorgeheizten Ofen eingebracht werden.

5. Verfahren nach einem der Ansprüche 1 bis 4, dadurch gekennzeichnet, daß die Graphitteilchen auf 600 bis 1000 cm³/g ausgedehnt werden.

6. Verfahren nach einem der Ansprüche 1 bis 5, dadurch gekennzeichnet, daß die ausgedehnten Graphitteilchen zu einem folienähnlichen Material mit einer Dicke von 0,025 bis 0,102 mm (1 bis 4 mils) zusammengepreßt werden.

7. Verfahren nach einem der Ansprüche 1 bis 6, dadurch gekennzeichnet, daß das Oxidationsmittel Schwefelsäure und Salpetersäure enthält.

8. Verfahren nach einem der Ansprüche 1 bis 7, dadurch gekennzeichnet, daß die Graphitteilchen in Schritt (c) mit einer wäßrigen Lösung gewaschen werden.

9. Verfahren nach einem der Ansprüche 1 bis 8, dadurch gekennzeichnet, daß die Graphitteilchen in Schritt (c) mit Wasser gewaschen werden.

## Revendications

1. Procédé de production d'une feuille de graphite dépourvue de perforations en trous d'épingle, ayant une épaisseur inférieure à 0,203 mm (8 mils), qui comprend :
(a) l'utilisation de particules de graphite naturel ayant une distribution des diamètres de particules correspondant aux ouvertures de mailles de tamis USS (U.S. Standard) de 850 µm à 300 µm, ayant une pureté d'au moins 97 % de graphite naturel pur ;
(b) le traitement des particules de graphite naturel avec un agent oxydant pour l'intercalation du graphite ;
(c) le lavage des particules de graphite intercalé pour réduire au minimum l'agglomération ;
(d) le séchage des particules lavées ;
(e) l'introduction des particules sèches directement dans un four préchauffé à une température, choisie préalablement, d'au moins environ 1093°C (2000°F) pour soumettre les particules de graphite à une expansion extrêmement rapide jusqu'à l'expansion des particules à un volume spécifique d'au moins 500 cm³/g ; et
(f) la compression du graphite, ayant subi une expansion considérable, en l'absence d'un liant sous forme d'une matière en feuille ayant une épaisseur inférieure à 0,203 mm (8 mils).

2. Procédé suivant la revendication 1, dans lequel les particules sont séchées à une teneur en eau inférieure à environ 2 % en poids.

3. Procédé suivant la revendication 2, dans lequel les particules sont séchées à une teneur en eau inférieure à environ 1 % en poids.

4. Procédé suivant l'une quelconque des revendications 1 à 3, dans lequel les particules sèches sont introduites dans un four préchauffé à une température, choisie préalablement, d'au moins environ 1371°C (2500°F).

5. Procédé suivant l'une quelconque des revendications 1 à 4, dans lequel les particules de graphite sont soumises à une expansion à un volume de 600 à 1000 cm³/g.

6. Procédé suivant l'une quelconque des revendications 1 à 5, dans lequel les particules de graphite expansées sont comprimées sous forme d'une matière en feuille de 0,025 à 0,102 mm (1 à 4 mils) d'épaisseur.

7. Procédé suivant l'une quelconque des revendications 1 à 6, dans lequel l'agent oxydant comprend l'acide sulfurique et l'acide nitrique.

8. Procédé suivant l'une quelconque des revendications 1 à 7, dans lequel, dans l'étape (c), les particules de graphite sont lavées avec une solution aqueuse.

9. Procédé suivant l'une quelconque des revendications 1 à 8, dans lequel, dans l'étape (c), les particules de graphite sont lavées avec de l'eau.
